(19) Europäisches Patentamt
European Patent Office
Office européen des brevets

(11) EP 3 141 118 A1

(12) EUROPEAN PATENT APPLICATION

(43) Date of publication:
**15.03.2017 Bulletin 2017/11**

(51) Int Cl.:
*A01N 43/40* (2006.01) *A01N 43/56* (2006.01)
*A01N 43/653* (2006.01) *A01P 3/00* (2006.01)

(21) Application number: **15185032.8**

(22) Date of filing: **14.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Bayer CropScience AG**
**40789 Monheim am Rhein (DE)**

(72) Inventors:
- **KRIEG, Ulrich**
  **51381 Leverkusen (DE)**
- **GÖHLICH, Frank**
  **40789 Monheim am Rhein (DE)**
- **MEISSNER, Ruth**
  **51375 Leverkusen (DE)**
- **GESTAT DE GARAMBE, Thierry**
  **69300 Caluire et Cuire (FR)**

(74) Representative: **BIP Patents**
**c/o Bayer Intellectual Property GmbH**
**Alfred-Nobel-Straße 10**
**40789 Monheim am Rhein (DE)**

# (54) COMPOUND COMBINATION FOR CONTROLLING CONTROL PHYTOPATHOGENIC HARMFUL FUNGI

(57) The invention relates to a combination comprising (A) compound of formula (I)

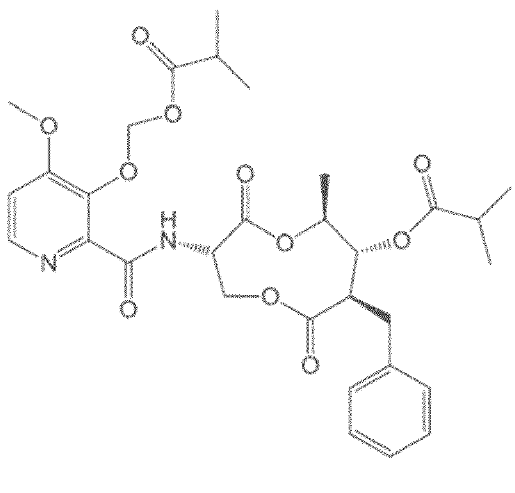

(I)

and (B) bixafen and (C) one further compound selected from prothioconazole, fluopyram and tebuconazole. The invention further relates to a composition comprising such combination, a method for curatively or preventively controlling phytopathogenic harmful fungi of plants or crops using such combination or composition, the use of such combination or composition to control phytopathogenic harmful fungi and to a seed that has been treated with such a combination or such a composition.

EP 3 141 118 A1

## Description

The invention relates to a combination comprising (A) compound of formula (I)

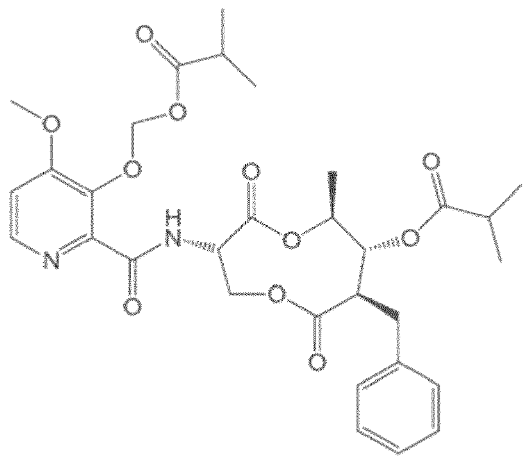

(I)

and (B) bixafen and (C) one further compound selected from prothioconazole, fluopyram and tebuconazol. The invention further relates to a composition comprising such combination, a method for curatively or preventively controlling phytopathogenic harmful fungi of plants or crops using such combination or composition, the use of such combination or composition to control phytopathogenic harmful fungi and to a seed that has been treated with such a combination or such a composition.

Compound (I), its preparation and its use as a fungicide are for example known from WO 03/035617. Further WO 2014/105842; WO 2014/106254; WO 2014/106259 and WO 2011/044213 disclose synergistic two component fungicidal mixtures comprising compound (I).

Environmental and economic requirements with regard, for example, to the spectrum of action, toxicity, selectivity, application rate, formation of residues, and favorable preparation ability imposed on modem-day fungicides are continually increasing. Furthermore resistances against known fungicides remains a constant issue. Therefore is a constant task to develop new fungicides which at least in some areas show advantages over known compounds.

The present invention provides such a new and advantages fungicide composition.

This compound composition comprises

(A) a compound of formula (I)

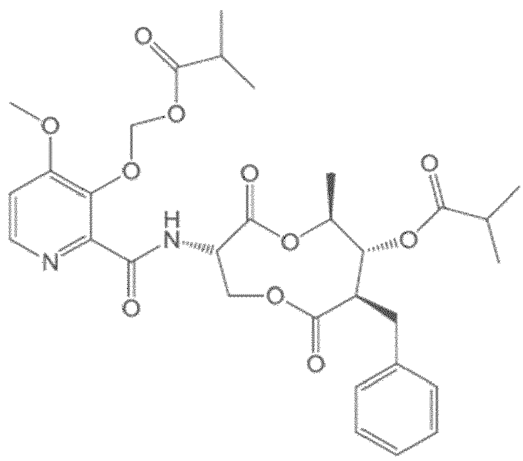

(I)

and

(B) bixafen

and

(C) one further compound selected from prothioconazole, fluopyram and tebuconazole.

Surprisingly it has been found that the compound combination of the invention provides a strong synergistic effect.

A synergistic effect of fungicides is present when the fungicidal activity of the active compound combinations exceeds the total of the activities of the active compounds when applied individually. The expected activity for a given combination of two or three active compounds can be calculated as follows (cf. Colby, S.R., "Calculating Synergistic and Antagonistic Responses of Herbicide Combinations", Weeds 1967, 15, 20-22).

The latter article mentions the formula for combinations of 2 active compounds:

$$E_1 = X + Y - \frac{X \cdot Y}{100}$$

and the formula for a combination of 3 active compounds:

$$E_2 = X + Y + Z - \frac{X \cdot Y - X \cdot Z - Y \cdot Z}{100} + \frac{X \cdot Y \cdot Z}{10000}$$

wherein

X denotes the efficacy when using active compound A at an application rate of m ppm (or g/ha),

Y denotes the efficacy when using active compound B (or C) at an application rate of n ppm (or g/ha),

Z denotes the efficacy when using active compound C at an application rate of r ppm (or g/ha),

$E_1$ denotes the efficacy when using active compounds A and B at application rates of m and n ppm (or g/ha), and

$E_2$ denotes the efficacy when using active compounds A and B and C at application rates of m and n and r ppm (or g/ha),

The term "synergistic effect" also means the effect defined by application of the Tammes method, "Isoboles, a graphic representation of synergism in pesticides", Netherlands Journal of Plant Pathology, 70(1964), pages 73-80.

Here, the efficacy is determined in %. 0 % means an efficacy which corresponds to that of the control, whereas an efficacy of 100 % means that no infection is observed.

If the actual fungicidal action exceeds the calculated value, the action of the combination is superadditive, i.e. a synergistic effect is present. In this case, the actually observed efficacy must exceed the value calculated using the above formula for the expected efficacy ($E_1$ or $E_2$).

Where a compound (A) or a compound (B) or a compound (C) can be present in tautomeric form, such a compound is understood hereinabove and hereinbelow also to include, where applicable, corresponding tautomeric forms, even when these are not specifically mentioned in each case.

Compounds (A) or compounds (B) or compounds (C) having at least one basic centre are capable of forming, for example, acid addition salts, e.g. with strong inorganic acids, such as mineral acids, e.g. perchloric acid, sulfuric acid, nitric acid, nitrous acid, a phosphoric acid, a hydrohalic acid, such as hydrogen fluoride, hydrogen chloride, hydrogen bromide and hydrogen iodide, or acidic salts, such as Na-$HSO_4$ and $KHSO_4$, with strong organic acids, formic acid, carbonic acid and alkanoic acids, such as acetic acid, trifluoroacetic acid, trichloroacetic acid and propionic acid, and also glycolic acid, thiocyanic acid, lactic acid, succinic acid, citric acid, benzoic acid, cinnamic acid, maleic acid, fumaric acid, tartaric acid, sorbic acid oxalic acid, alkylsulphonic acids (sulphonic acids having straight-chain or branched alkyl radicals of 1 to 20 carbon atoms), arylsulphonic acids or aryldisulphonic acids (aromatic radicals, such as phenyl and naphthyl, which carry one or two sulphonic acid groups), alkylphosphonic acids (phosphonic acids having straight-chain or branched alkyl radicals of 1 to 20 carbon atoms), arylphosphonic acids or aryldiphosphonic acids (aromatic radicals, such as phenyl and naphthyl, which carry one or two phosphonic acid radicals), where the alkyl and aryl radicals may carry further substituents, for example p-toluenesulphonic acid, 1,5-naphthalenedisulphonic acid, salicylic acid, p-aminosalicylic acid, 2-phenoxybenzoic acid, 2-acetoxybenzoic acid, etc.. Compounds (A) or compounds (B) or compounds (C) having at least one acid group are capable of forming, for example, salts with bases, e.g. metal salts, such as alkali

metal or alkaline earth metal salts, e.g. sodium, potassium or magnesium salts, or salts with ammonia or an organic amine, such as morpholine, piperidine, pyrrolidine, a mono-, di- or tri-lower alkylamine, e.g. ethyl-, diethyl-, triethyl- or dimethyl-propyl-amine, or a mono-, di- or tri-hydroxy-lower alkylamine, e.g. mono-, di- or tri-ethanolamine. In addition, corresponding internal salts may optionally be formed. In the context of the invention, preference is given to agrochemically advantageous salts. In view of the close relationship between the compounds (A) or the compounds (B) or compounds (C) in free form and in the form of their salts, hereinabove and herein below any reference to the free compounds (A) or free compounds (B) or free compounds (C) or to their salts should be understood as including also the corresponding salts or the free compounds (A) or free compounds (B) or free compounds (C), respectively, where appropriate and expedient. The equivalent also applies to tautomers of compounds (A) or compounds (B) or compounds (C) and to their salts.

According to the invention the expression "combination" stands for the various combinations of compounds (A) and (B) and (C), for example in a single "ready-mix" form, in a combined spray mixture composed from separate formulations of the single active compounds, such as a "tank-mix", and in a combined use of the single active ingredients when applied in a sequential manner, i.e. one after the other within a reasonably short period, such as a few hours or days. Preferably the order of applying the compounds (A) and (B) and (C) is not essential for working the present invention.

According to a first preferred embodiment of the invention compound (C) is prothioconazole.

Alternatively preferred is that compound (C) is fluopyram.

It is also preferred when the weight ratio between any two compounds (A), (B) or (C), independently of each other, is between 1:5 to 5:1 and preferably between 1:3 to 3:1.

In a further aspect, there is provided a composition comprising a combination according to this invention.

Preferably the composition comprises adjuvants, solvents, carrier, surfactants and / or extenders.

In general, the composition according to the invention may contain from 0.05 to 99% by weight of compounds (A)-(C), preferably from 10 to 70% by weight.

The combination or composition according to the invention can be used as such, in form of their formulations or as the use forms prepared therefrom, such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ULV) liquid, ultra low volume (ULV) suspension, water dispersible granules or tablets, water dispersible powder for slurry treatment, water soluble granules or tablets, water soluble powder for seed treatment and wettable powder.

The treatment of plants and plant parts with the compound combination or composition according to the invention is carried out directly or by action on their environment, habitat or storage area by means of the normal treatment methods, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting.

The active compounds within the combinations or compositions according to the invention have potent microbicide activity and can be employed for controlling undesired micro-organisms, such as fungi or bacteria, in crop protection or in the protection of materials.

Within the combinations or compositions according to the invention, fungicide compounds can be employed in crop protection for example for controlling Plasmodiophoromycetes, Oomycetes, Chytridiomycetes, Zygomycetes, Ascomycetes, Basidiomycetes and Deuteromycetes.

The fungicide combinations or compositions according to the invention can be used to curatively or preventively control the phytopathogenic fungi of plants or crops. Thus, according to a further aspect of the invention, there is provided a method for curatively or preventively controlling the phytopathogenic fungi of plants or crops comprising the use of a fungicide combination or composition according to the invention by application to the phytopathogenic harmful fungi and / or their habitat.

Preferably the combination or the composition is applied to the seed, the plant, to fruits of plants or to the soil on which the plant grows or is supposed to grow.

A further aspect of the present invention is the use of a combination or a composition according to the invention to control phytopathogenic harmful fungi.

Preferred is a use for the treatment of transgenic plants or for the treatment of seeds of transgenic plants.

The combinations or composition of the invention is also suitable for the treatment of seeds. A large part of the damage caused by diseases on cultigens occurs by infestation of the seed during storage and after sowing the seed in the ground as well as during and after germination of the plants. This phase is especially critical since the roots and shoots of the growing plant are particularly sensitive and even a small amount of damage can lead to withering of the whole plant.

Accordingly a further aspect of the present invention relates to a seed that has been treated with a combination or a composition according to the invention.

Plants which can be treated include the following main crop plants: maize, soya bean, alfalfa, cotton, sunflower, *Brnssica* oil seeds such as *Brassica napus* (e.g. canola, rapeseed), *Brassica rapa, B. juncea* (e.g. (field) mustard) and *Brassica carinata, Arecaceae sp.* (e.g. oilpalm, coconut), rice, wheat, sugar beet, sugar cane, oats, rye, barley, millet and sorghum, triticale, flax, nuts, grapes and vine and various fruit and vegetables from various botanic taxa, e.g. *Rosaceae sp.* (e.g. pome fruits such as apples and pears, but also stone fruits such as apricots, cherries, almonds, plums and peaches, and berry fruits such as strawberries, raspberries, red and black currant and gooseberry), *Ribesioidae sp., Juglandaceae sp., Betulaceae sp., Anacardiaceae sp., Fagaceae sp., Moraceae sp., Oleaceae sp.* (e.g. olive tree), *Actinidaceae sp., Lauraceae sp.* (e.g. avocado, cinnamon, camphor), *Musaceae sp.* (e.g. banana trees and plantations), *Rubinceae sp.* (e.g. coffee), *Theaceae sp.* (e.g. tea), *Sterculiceae sp., Rutaceae sp.* (e.g. lemons, oranges, mandarins and grapefruit); *Solanaceae sp.* (e.g. tomatoes, potatoes, peppers, capsicum, aubergines, tobacco), *Liliaceae sp., Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), *Chenopodiaceae sp.* (e.g. Swiss chard, fodder beet, spinach, beetroot), *Linaceae sp.* (e.g. hemp), *Cannabeacea sp.* (e.g. cannabis), *Malovaceae sp.* (e.g. okra, cocoa), *Papaveraceae* (e.g. poppy), *Asparagaceae* (e.g. asparagus); useful plants and ornamental plants in the garden and woods including turf, lawn, grass and *Stevia rebaudiana*; and in each case genetically modified types of these plants.

Preferably plants include cereals such as wheat, rye, barley and triticale, *Cucurbitaceae sp.* (e.g. cucumbers - including gherkins, pumpkins, watermelons, calabashes and melons), *Solanaceae sp.* (e.g. tomatoes, peppers, capsicum, aubergines), *Rosaceae sp.* (e.g. pome fruits such as apples and pears, but also berry fruits such as strawberries), *Composite sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), soya bean, grapes and vine, sugar beet and cutflowers.

Most preferred plants include cereals such as wheat, rye, barley and triticale.

The treatment of genetically modified organisms, e.g. plants or seeds is also possible. Genetically modified plants are plants of which a heterologous gene encoding a protein of interest has been stably integrated into genome. The expression "heterologous gene encoding a protein of interest" essentially means genes which give the transformed plant new agronomic properties, or genes for improving the agronomic quality of the modified plant.

The invention can also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The inventive active ingredients may prevent adverse effects, such as rotting, decay, discoloration, discoloration or formation of mould. Preferably "storage goods" is understood to denote natural substances of vegetable origin and their processed forms, more preferably fruits and their processed forms, such as pomes, stone fruits, soft fruits and citrus fruits and their processed forms.

Non-limiting examples of pathogens of fungal diseases which can be treated in accordance with the invention include:

diseases caused by powdery mildew pathogens, for example *Blumeria* species, for example *Blumeria* graminis; *Podosphaera* species, for example *Podosphaera leucotricha; Sphaerotheca* species, for example *Sphaerotheca fuliginea*; *Uncinula* species, for example *Uncinula necator*; *Microsphaera* species, for example *Microsphaera diffusa; Leveillula species,* for example *Leveillula taurica; Erysiphe* species, for example *Erysiphe cichoracearum;*

diseases caused by rust disease pathogens, for example *Gymnosporangium* species, for example *Gymnosporangium sabinae; Hemileia* species, for example *Hemileia vastatrix*; *Phakopsora* species, for example *Phakopsora pachyrhizi* and *Phakopsora meibomiae*; *Puccinia* species, for example *Puccinia recondite, P. triticina*, *P. graminis* or *P. striiformis*; *Uromyces* species, for example *Uromyces appendiculatus*;

diseases caused by pathogens from the group of the *Oomycetes*, for example *Albugo* species, for example *Algubo candida*; *Bremia* species, for example *Bremia lactucae*; *Peronospora* species, for example *Peronospora pisi* or *P. brassicae*; Phytophthora species, for example *Phytophthora infestans*; *Plasmopara* species, for example *Plasmopara viticola*; *Pseudoperonospora* species, for example *Pseudoperonospora humuli* or *Pseudoperonospora cubensis*; Pythium species, for example *Pythium ultimum*;

leaf blotch diseases and leaf wilt diseases caused, for example, by *Alternaria* species, for example *Alternaria solani*; *Cercospora* species, for example *Cercospora beticola*; *Cladiosporium* species, for example *Cladiosporium cucumerinum*; *Cochliobolus* species, for example *Cochliobolus sativus* (conidia form: Drechslera, Syn: Helminthosporium), *Cochliobolus miyabeanus*; *Colletotrichum* species, for example *Colletotrichum lindemuthanium*; *Cycloconium* species, for example *Cycloconium oleaginum*; *Diaporthe* species, for example *Diaporthe citri*; *Elsinoe* species, for example *Elsinoe fawcettii*; *Gloeosporium* species, for example *Gloeosporium laeticolor*; *Glomerella* species, for example *Glomerella cingulata*; *Guignardia* species, for example *Guignardia bidwelli*; *Leptosphaeria* species, for example *Leptosphaeria maculans*, *Leptosphaeria nodorum*; *Magnaporthe* species, for example *Magnaporthe grisea*; *Marssonia* species, for example *Marssonia coronaria*; *Microdochium* species, for example *Microdochium nivale*; *Mycosphaerella* species, for example *Mycosphaerella graminicola*, iM. *arachidicola* and *M. fijiensis; Phneosphaeria* species, for example *Phaeosphaeria nodorum*; *Pyrenophora* species, for example *Pyrenophora teres*, *Pyrenophora tritici repentis*; *Ramularia* species, for example *Ramularia collo-cygni*, *Ramularia areola*; *Rhynchosporium* species, for example *Rhynchosporium secalis*; *Septoria* species, for example *Septoria apii, Septoria lycopersii*; *Typhula* species, for example *Tiphula incarnata*; *Venturia* species, for example *Venturia inaequalis*;

root and stem diseases caused, for example, by *Corticium* species, for example *Corticium graminearum*; *Fusarium* species, for example *Fusarium oxysporum*; *Gaeumannomyces* species, for example *Gaeumannomyces graminis; Rhizoctonia* species, such as, for example *Rhizoctonia solani; Sarocladium* diseases caused for example by *Sarocladium oryzae*; *Sclerotium* diseases caused for example by *Sclerotium oryzae*; *Tapesia* species, for example *Tapesia acuformis*; *Thielaviopsis* species, for example *Thielaviopsis basicola*;

ear and panicle diseases (including corn cobs) caused, for example, by *Alternaria* species, for example *Alternana* spp.; *Aspergillus* species, for example *Aspergillus flavus*; *Cladosporium* species, for example *Cladosporium cladosporioides*; *Claviceps* species, for example *Claviceps purpuren*; *Fusarium* species, for example *Fusarium culmorum*; *Gibberella* species, for example *Gibberella zeae*; *Monographella* species, for example *Monographella nivalis*; *Septoria* species, for example *Septoria nodorum*;

diseases caused by smut fungi, for example *Sphacelotheca* species, for example *Sphacelotheca reiliana*; *Tilletia* species, for example *Tilletia caries*, *T. controversa*; *Urocystis* species, for example *Urocystis occulta*; *Ustilago* species, for example *Ustilago nuda, U. nuda tritici*;

fruit rot caused, for example, by *Aspergillus* species, for example *Aspergillus flavus*; *Botrytis* species, for example *Botrytis cinerea*; *Penicillium* species, for example *Penicillium expansum* and *P. purpurogenum*; *Sclerotinia* species, for example *Sclerotinia sclerotiorum*; *Verticilium* species, for example *Verticilium alboatrum*;

seed and soilborne decay, mould, wilt, rot and damping-off diseases caused, for example, by *Alternaria* species, caused for example by *Alternaria brassicicola*; *Aphanomyces* species, caused for example by *Aphanomyces euteiches*; *Ascochyta* species, caused for example by *Ascochyta lentis; Aspergillus* species, caused for example by *Aspergillus flavus*; *Cladosporium* species, caused for example by *Cladosporium herbarium*; *Cochliobolus* species, caused for example by *Cochliobolus sativus*; (Conidiaform: Drechslera, Bipolaris Syn: Helminthosporium); *Colletotrichum* species, caused for example by *Colletotrichum coccodes*; *Fusarium* species, caused for example by *Fusarium culmorum*; *Gibberella* species, caused for example by *Gibberella zeae*; *Macrophomina* species, caused for example by *Macrophomina phaseolina*; *Monographella* species, caused for example by *Monographella nivalis*; *Penicillium* species, caused for example by *Penicillium expansum*; *Phoma* species, caused for example by *Phoma lingam*; *Phomopsis* species, caused for example by *Phomopsis sojae*; *Phytophthora* species, caused for example by *Phytophthora cactorum*; *Pyrenophora* species, caused for example by *Pyrenophora graminea*; *Pyricularia* species, caused for example by *Pyricularia oryzae*; *Pythium* species, caused for example by *Pythium ultimum*; *Rhizoctonia* species, caused for example by *Rhizoctonia solani*; *Rhizopus* species, caused for example by *Rhizopus oryzne*; *Sclerotium* species, caused for example by *Sclerotium rolfsii*; *Septoria* species, caused for example by *Septoria nodorum*; *Typhula* species, caused for example by *Tiphula incamata*; *Verticillium* species, caused for example by *Verticillium dahliae*;

cancers, galls and witches' broom caused, for example, by *Nectria* species, for example *Nectria galligena*;

wilt diseases caused, for example, by *Monilinia* species, for example *Monilinia laxa*;

leaf blister or leaf curl diseases caused, for example, by *Exobasidium* species, for example *Exobasidium vexans;*

*Taphrina* species, for example *Taphrina deformans*;

decline diseases of wooden plants caused, for example, by Esca disease, caused for example by *Phaemoniella clamydospora*, *Phaeoacremonium aleophilum* and *Fomitiporia mediterranea*; Eutypa dyeback, caused for example by *Eutypa lata* ; Ganoderma diseases caused for example by *Ganoderma boninense;* Rigidoporus diseases caused for example by *Rigidoporus liguosus*;

diseases of flowers and seeds caused, for example, by *Botrytis* species, for example *Botrytis cinerea*;

diseases of plant tubers caused, for example, by *Rhizoctonia* species, for example *Rhizoctonia solani*; *Helminthosporium* species, for example *Helminthosporium solani*;

Club root caused, for example, by *Plasmodiophora* species, for example *Plamodiophora brassicae*;

diseases caused by bacterial pathogens, for example *Xanthomonas* species, for example *Xanthomonas campestris pv. oryzne*; *Pseudomonas* species, for example *Pseudomonas syringae pv. lachrymans*; *Erwinia* species, for example *Erwinia amylovora*.

The following diseases of soya beans can be controlled with preference:

Fungal diseases on leaves, stems, pods and seeds caused, for example, by *Alternaria* leaf spot (*Alternaria spec. atrans tenuissima*), Anthracnose (*Colletotrichum gloeosporoides dematium var. truncatum*), brown spot (*Septoria glycines*), cercospora leaf spot and blight (*Cercospora kikuchii),* choanephora leaf blight (*Choanephora infundibulifera trispora* (Syn.)), dactuliophora leaf spot (*Dactuliophora glycines*), downy mildew (*Peronospora manshurica*), drechslera blight (*Drechslera glycini*), frogeye leaf spot (*Cercospora sojina*), leptosphaerulina leaf spot (*Leptosphaerulina trifolii*), phyllostica leaf spot (*Phyllosticta sojaecola*), pod and stem blight (*Phomopsis sojae*)*,* powdery mildew (*Microsphaera diffusa*), pyrenochaeta leaf spot (*Porenochaeta glycines*), rhizoctonia aerial, foliage, and web blight (*Rhizoctonia solani*), rust (*Phakopsora pachyrhizi*, *Phakopsora meibomiae*), scab (*Sphaceloma glycines*), stemphylium leaf blight (*Stemphylium bottyosum*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot (*Fusarium oxysporum*, *Fusarium orthoceras*, *Fusarium semitectum*, *Fusarium equiseti*), mycoleptodiscus root rot (*Mycoleptodiscus terrestris*), neocosmospora (*Neocosmospora vasinfecta*), pod and stem blight (*Diaporthe phaseolorum*), stem canker (*Dinporthe phaseolorum var. caulivora*), phytophthora rot (*Phytophthora megasperma*), brown stem rot (*Phialophora gregata*), pythium rot (*Pothium aphanidermatum*, *Pythium irregulare*, *Pythium debaryanum, Pythium myriotylum*, *Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

Particularly preferred, the active ingredient combinations or compositions according to the invention are suitable for controlling the following plant diseases:

*Blumeria* (old name: *Erysiphe) graminis* (powdery mildew) on cereals (e.g. wheat or barley); *Erysiphe* spp. (powdery mildew) on sugar beet (*E. betae*), vegetables (e.g. *E. pisi*)*,* such as cucumber, gourd, muskmelon (cantaloupe), pumpkin, and squash species (e.g. *E. cichoracenrum*) and cabbage species, such as red cabbage, broccoli, brussels sprouts, cauliflower (e.g. *E. cruciferarum*)*;* and tomato (*Erysiphe locopersici*), and pepper, eggplant, artischoke (*Leveillula taurica*), *Microsphaera diffusa* (*powdery mildew*) on soybeans; *Podosphaera* spp. (powdery mildew) on Rosaceae, hops, pomaceaus fruit and soft fruit, e.g. *P. leucotricha* on apple; *Uncinula* (syn. *Erysiphe*) *necator* (*powdery* mildew, anamorph: *Oidium tuckeri*) on grapevines; *Sphaerotheca fuliginea* (powdery mildew) on cucumber species.

The compound combination or compositions according to the invention are particularly suitable for controlling

the following diseases on cereals, in particular on wheat or barley:

*Mocosphaerella* species, for example *Mocosphaerella graminicola* (synonym *Septoria tritici), Puccinia* species, for example *Puccinia recondite, P. triticina, P. graminis* or *P. striiformis*; *Leptosphaeria* species, for example *Leptosphaeria nodorum*; *Pyrenophora* species, for example *Pyrenophora teres, Pyrenophora tritici repentis, Pyrenophora graminea*; *Ramularia* species, for example *Ramularia collo-cygui, Gaeumannomyces* species, for example *Gaeumannomyces graminis*; *Fusarium* species, for example *Fusarium culmorum*; *Gibberella* species, for example *Gibberella zeae*; *Monographella* species, for example *Monographella nivalis*; *Septoria* species, for example *Septoria nodorum*; *Cochliobolus* species, caused for example by *Cochliobolus sativus*; (Conidiaform: Drechslera, Bipolaris Syn: Helminthosporium) *Rhynchosporium* species, for example *Rhynchosporium secalis.*

The active compound combination or compositions according to the invention allow a broadening of the spectrum of fungicidal activity to other phytopathogens against the individual compounds are less effective or totally ineffective: Additionally, although achieving adequate fungicidal control a reduction in the rate of application of the active ingredients can be achieved by the active compound combination or compositions according to the invention. Such reduction in the rate of application of the individual active ingredients reduces the risk of resistances against such individual active ingredients.

When using the compound combination or composition of the invention, the application rates can be varied within a relatively wide range, depending on the kind of application. It can be

- in the case of treatment of plant parts, for example leaves: from 10 to 800 g/ha and preferably from 50 to 300 g/ha (in the case of application by watering or dripping, it is even possible to reduce the application rate, especially when inert substrates such as rockwool or perlite are used);
- in the case of seed treatment: from 2.5 to 25 g per 100 kg of seed, and preferably from 2.5 to 12.5 g per 100 kg of seed;
- in the case of soil treatment: from 1 to 5000 g/ha.

In case of treatment of plant parts the application rate can be

- from 20 to 200 g/ha more preferably from 40 to 170 g/ha, most preferably from 50 to 150 g/ha compound (A));
- from 20 to 150 g/, more preferably from 40 to 125 g/ha, most preferably from 50 to 100 g/ha (compound (B));
- from 50 to 300 g/ha, more preferably from 80 to 250 g/ha, most preferably from 100 to 200 g/ha (Compound (C)).

## Examples

### Example 1: Synergistic Effect in Field Trials in Winter Wheat

The advanced fungicidal activity of the compound combinations according to the invention is evident from the example below. While the individual active compounds exhibit weaknesses with regard to the fungicidal activity, the combinations have an activity which exceeds a simple addition of activities.

The field trial FA14VSD516XJE1 was conducted at the Bayer CropScience experimental station Langförden, Germany. The seeds of the winter wheat variety "Ritmo" were planted on October 2, 2013. Fertilization, herbicide- and plant growth regulator applications were carried out according to the local agricultural practice.

To test for fungicide activity against *Pyrenophora tritici-repentis* (PYRNTR), the plots of the field trial were sprayed once with the formulated active compound or the formulated active compound combination at growth stage BBCH 41 (May 15, 2014). There were four replicated plots per treatment; the single plot size was 16,25 $m^2$. Treatments were applied with spray volumes of 300 liters/hectare. The trial has been conducted according to approved guidelines (EPPO).

The active ingredients, formulated as emulsifier concentrates were applied as tank mixtures with rates of 100+125 g a.i./ha Compound (I)+bixafen, 100+200 g a.i./ha Compound (I)+prothioconazole, 100 g a.i./ha Compound (I) 050 EC, 125 g a.i./ha bixafen, 200 g a.i./ha prothioconazole and 100+75+150 g a.i./ha Compound (I)+bixafen+prothioconazole.

Products respectively formulated compound or compound combination:

Compound (I) 050 EC + bixafen 125 EC,

Compound (I) 050 EC + prothioconazole 200 EC,

Compound (I) 050 EC,

Bixafen 125 EC,

Prothioconazole 200 EC,

Compound (I) 050 EC + bixafen & prothioconazole 225 EC.

Disease development of *Pyrenophora tritici-repentis* relied on natural inoculum (no artificial infestation). The test was evaluated 49 days after the single application (49DAA) at the plant growth stage BBCH 85. Therefore the disease severity was assessed visually on flag leaves (FL-0) and scored on a scale of 0 to 100 percent. The percentage of disease control (%Abbott) was then calculated using the ratio of disease on treated plants relative to control plants. 0% means an efficacy which corresponds to that of the untreated control, while an efficacy of 100% means that no disease is observed.

In the trial FA14VSD516XJE1, against *Pyrenophora tritici-repentis* for example, the following active compound combinations in accordance with the present application showed a synergistically enhanced activity compared to the (active) compounds applied individually.

**Example 1A: *Pyrezzophora tritici-repentis* test (wheat)**

Active compounds / formulations:

(I) Compound (I) 050 EC + bixafen 125 EC,

(II) Prothioconazole 200 EC,

(I) + (II) Compound (I) 050 EC + bixafen & prothioconazole 225 EC

[a.i. ratio Compound (I) + bixafen (I) : prothioconazole (II) = 1 : 0,75 : 1,5].

Tab.1: Efficacy against *Pyrenophora tritici-repentis* in wheat (variety: Ritmo, crop stage: BBCH 85).

| Active compounds | Application rate of active compound [g/ha] | Trial: FA14VSD516XJE1<br>Plant part rated: Flag leaf (FL-0)<br>Target (Pathogen): PYRNTR / 49 DAA | | |
|---|---|---|---|---|
| | | Severity | Efficacy | |
| | | % | %Abbott | %Abbott |
| | | Mean | Found* | calc.** |
| Untreated control | 0 | 10,0 | - | |
| (I) Compound (I)+bixafen | 100+125 | 5,8 | 42,5 | |
| (II) Prothioconazole | 200 | 10,0 | 0,0 | |
| (I) + (II) 1 : 0,75 : 1,5 | 100+75+150 | 4,5 | 55,0 | 42,5 |
| DAA = Days after application, *found = activity found / **calc. = activity | | | | |

**Example 1B: *Pyrenophora tritici-repentis* test (wheat)**

Active compounds / formulations:

(I) Compound (I) 050 EC + prothioconazole 200 EC,

(II) Bixafen 125 EC,

(I) + (II) Compound (I) 050 EC + bixafen & prothioconazole 225 EC

[a.i. ratio Compound (I) + bixafen (I) : prothioconazole (II) = 1 : 0,75 : 1,5].

Tab.2: Efficacy against *Pyrenophora tritici-repentis* in wheat (variety: Ritmo, crop stage: BBCH 85).

| Active compounds | Application rate of active compound [g/ha] | Trial: FA14VSD516XJE1<br>Plant part rated: Flag leaf (FL-0)<br>Target (Pathogen): PYRNTR / 49 DAA | | |
|---|---|---|---|---|
| | | Severity | Efficacy | |
| | | % | %Abbott* | %Abbott |
| | | Mean | found | calc.** |
| Untreated control | 0 | 10,0 | - | |
| (I) Compound (I)+prothioconazole | 100+200 | 5,0 | 50,0 | |
| (II) Bixafen | 125 | 10,8 | 0,0 | |
| (I) + (II) 1 : 0,75 : 1,5 | 100+75+150 | 4,5 | 55,0 | 50,0 |
| DAA = Days after application, *found = activity found / **calc. = activity | | | | |

<u>**Example 1C: *Pyrenophora tritici-repentis* test (wheat)**</u>

Active compounds / formulations:

(I) Compound (I) 050 EC,

(II) Bixafen 125 EC,

(III) Prothioconazole 200 EC,

(I) +(II) +(III) Compound (I) 050 EC + bixafen & prothioconazole 225 EC

[a.i. ratio Compound (I) + bixafen (I) : prothioconazole (II) = 1 : 0,75 : 1,5].

Tab.3: Efficacy against *Pyrenophora tritici-repentis* in wheat (variety: Ritmo, crop stage: BBCH 85).

| Active compounds | Application rate of active compound [g/ha] | Trial: FA14VSD516XJE1<br>Plant part rated: Flag leaf (FL-0)<br>Target (Pathogen): PYRNTR / 49 DAA | | |
|---|---|---|---|---|
| | | Severity | Efficacy | |
| | | % | %Abbott | %Abbott |
| | | Mean | Found* | calc.** |
| Untreated control | 0 | 10,0 | - | |
| (I) Compound (I) | 100 | 10,0 | 0,0 | |
| (II) Bixafen | 125 | 10,8 | 0,0 | |
| (III) Prothioconazole | 200 | 10,0 | 0,0 | |

(continued)

| Active compounds | Application rate of active compound [g/ha] | Trial: FA14VSD516XJE1<br>Plant part rated: Flag leaf (FL-0)<br>Target (Pathogen): PYRNTR / 49 DAA | | |
|---|---|---|---|---|
| | | Severity | Efficacy | |
| | | % | %Abbott | %Abbott |
| | | Mean | Found* | calc.** |
| (I) +(II) +(III) 1 : 0,75 : 1,5 | 100+75+150 | 4,5 | 55,0 | 0,0 |
| DAA = Days after application, *found = activity found / **calc. = activity | | | | |

## Claims

1. Compound combination comprising

(A) compound of formula (I)

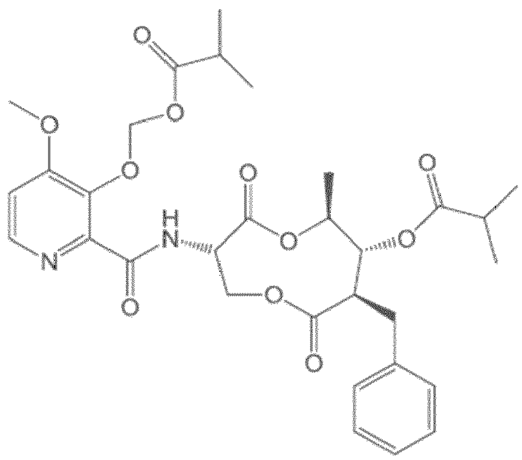

(I)

and
(B) bixafen
and
(C) one further compound selected from prothioconazole, fluopyram and tebuconazole.

2. Combination of claim 1 wherein compound (C) is prothioconazole.

3. Combination of claim 1 wherein compound (C) is fluopyram.

4. Combination according to any of claims 1 to 3 wherein the weight ratio between any two compounds (A), (B) or (C), independently of each other, is between 1:5 to 5:1 and preferably between 1:3 to 3:1.

5. Composition comprising a combination according to any of claims 1 to 4.

6. Composition according to claim 5 further comprising adjuvants, solvents, carrier, surfactants and / or extenders.

7. Method for curatively or preventively controlling phytopathogenic harmful fungi of plants or crops comprising the step of applying a combination according to any of claims 1 to 4 or a composition according to claim 5 or 6 to the phytopathogenic harmful fungi and / or their habitat.

8. Method according to claim 7 wherein the combination or the composition is applied to the seed, the plant, to fruits of plants or to the soil on which the plant grows or is supposed to grow.

9. Use of a combination according to any of claims 1 to 4 or a composition according to claim 5 or 6 to control phytopathogenic harmful fungi.

10. Use of claim 9 for the treatment of transgenic plants or for the treatment of seeds of transgenic plants.

11. Seed that has been treated with a combination according to any of claims 1 to 4 or a composition according to claim 5 or 6.

Europäisches Patentamt
European Patent Office
Office européen des brevets

# EUROPEAN SEARCH REPORT

Application Number
EP 15 18 5032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/082160 A1 (OWEN W JOHN [US] ET AL) 7 April 2011 (2011-04-07)<br>* paragraphs [0002] - [0006], [0021], [0037], [0042] - [0052] *<br>* tables 1-3 * | 1-11 | INV.<br>A01N43/40<br>A01N43/56<br>A01N43/653<br>A01P3/00 |
| Y | US 2014/187590 A1 (OUIMETTE DAVID [US] ET AL) 3 July 2014 (2014-07-03)<br>* paragraphs [0005] - [0009], [0019], [0022], [0040] *<br>* tables 1-5 * | 1,4-11 | |
| A | WO 03/035617 A2 (DOW AGROSCIENCES LLC [US]; MEYER KEVIN GERALD [US]; ROGERS RICHARD BRE) 1 May 2003 (2003-05-01)<br>* page 1, line 4 - line 12 *<br>* page 3, line 11 - page 6, line 3 *<br>* entry 23;<br>page 22 *<br>* page 31, line 9 - page 35 * | 1-11 | |
| | | | TECHNICAL FIELDS SEARCHED (IPC) |
| Y | EP 2 612 554 A1 (BAYER CROPSCIENCE AG [DE]) 10 July 2013 (2013-07-10)<br>* paragraphs [0001], [0005] - [0008], [0010], [0029], [0030], [0056] - [0057] *<br>* examples 1A, 1B, 2 * | 1-11 | A01N |
| Y | WO 2011/073103 A1 (BAYER CROPSCIENCE AG [DE]; KRIEG ULRICH [DE]; DAHMEN PETER [DE]; STEIN) 23 June 2011 (2011-06-23)<br>* page 1, line 3 - line 18 *<br>* page 3, line 1 - line 28 *<br>* page 9, line 6 - page 11, line 28 *<br>* tables C-1 * | 1-11 | |

The present search report has been drawn up for all claims

1

| Place of search | Date of completion of the search | Examiner |
|---|---|---|
| Munich | 30 October 2015 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 18 5032

This annex lists the patent family members relating to the patent documents cited in the above-mentioned European search report. The members are as contained in the European Patent Office EDP file on
The European Patent Office is in no way liable for these particulars which are merely given for the purpose of information.

30-10-2015

| Patent document cited in search report | Publication date | Patent family member(s) | Publication date |
|---|---|---|---|
| US 2011082160 A1 | 07-04-2011 | AU 2010303529 A1 | 26-04-2012 |
| | | AU 2015200857 A1 | 12-03-2015 |
| | | CA 2776746 A1 | 14-04-2011 |
| | | CN 102711477 A | 03-10-2012 |
| | | CO 6541551 A2 | 16-10-2012 |
| | | CR 20120195 A | 01-06-2012 |
| | | EC SP12011870 A | 31-07-2012 |
| | | EP 2485592 A1 | 15-08-2012 |
| | | EP 2904901 A2 | 12-08-2015 |
| | | JP 2013507372 A | 04-03-2013 |
| | | KR 20120093925 A | 23-08-2012 |
| | | NZ 599319 A | 27-06-2014 |
| | | RU 2012118656 A | 20-11-2013 |
| | | RU 2015106010 A | 20-07-2015 |
| | | UA 106245 C2 | 11-08-2014 |
| | | US 2011082160 A1 | 07-04-2011 |
| | | US 2015065529 A1 | 05-03-2015 |
| | | WO 2011044213 A1 | 14-04-2011 |
| US 2014187590 A1 | 03-07-2014 | AU 2013369670 A1 | 09-07-2015 |
| | | CA 2896242 A1 | 03-07-2014 |
| | | EP 2941126 A1 | 11-11-2015 |
| | | IL 239651 A | 31-08-2015 |
| | | KR 20150103165 A | 09-09-2015 |
| | | TW 201431491 A | 16-08-2014 |
| | | US 2014187590 A1 | 03-07-2014 |
| | | UY 35254 A | 31-07-2014 |
| | | WO 2014106259 A1 | 03-07-2014 |
| WO 03035617 A2 | 01-05-2003 | AR 037328 A1 | 03-11-2004 |
| | | AU 2002363005 A1 | 06-05-2003 |
| | | CA 2458974 A1 | 01-05-2003 |
| | | CO 5390047 A1 | 30-04-2004 |
| | | DK 1438306 T3 | 23-06-2014 |
| | | DK 2527342 T3 | 02-03-2015 |
| | | EP 1438306 A2 | 21-07-2004 |
| | | EP 2527342 A2 | 28-11-2012 |
| | | EP 2848616 A1 | 18-03-2015 |
| | | ES 2456323 T3 | 22-04-2014 |
| | | ES 2526419 T3 | 12-01-2015 |
| | | JP 4560638 B2 | 13-10-2010 |
| | | JP 2005507921 A | 24-03-2005 |
| | | PT 1438306 E | 03-06-2014 |
| | | PT 2527342 E | 05-02-2015 |
| | | US 2004192924 A1 | 30-09-2004 |
| | | WO 03035617 A2 | 01-05-2003 |

EPO FORM P0459

For more details about this annex : see Official Journal of the European Patent Office, No. 12/82

# ANNEX TO THE EUROPEAN SEARCH REPORT ON EUROPEAN PATENT APPLICATION NO.

EP 15 18 5032

This annex lists the patent family members relating to the patent documents cited in the above-mentioned European search report. The members are as contained in the European Patent Office EDP file on
The European Patent Office is in no way liable for these particulars which are merely given for the purpose of information.

30-10-2015

| Patent document cited in search report | Publication date | Patent family member(s) | Publication date |
|---|---|---|---|
| EP 2612554 A1 | 10-07-2013 | AR 089694 A1 | 10-09-2014 |
| | | CA 2860570 A1 | 18-07-2013 |
| | | EP 2612554 A1 | 10-07-2013 |
| | | EP 2802210 A1 | 19-11-2014 |
| | | US 2014378514 A1 | 25-12-2014 |
| | | WO 2013104609 A1 | 18-07-2013 |
| WO 2011073103 A1 | 23-06-2011 | EP 2512244 A1 | 24-10-2012 |
| | | RU 2012129673 A | 27-01-2014 |
| | | WO 2011073103 A1 | 23-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03035617 A
- WO 2014105842 A
- WO 2014106254 A
- WO 2014106259 A
- WO 2011044213 A


### Non-patent literature cited in the description


- **COLBY, S.R.** Calculating Synergistic and Antagonistic Responses of Herbicide Combinations. *Weeds,* 1967, vol. 15, 20-22
- Isoboles, a graphic representation of synergism in pesticides. *Netherlands Journal of Plant Pathology,* 1964, vol. 70, 73-80